# EUROPEAN PATENT SPECIFICATION

(11) **EP 3 342 585 B1**
(45) Date of publication and mention of the grant of the patent: **20.05.2020**
(21) Application number: 16868746.5
(22) Date of filing: 12.04.2016
(51) Int. Cl.: B29D 30/06, B60C 11/16, B29D 30/66

(54) **CERAMIC TIRE STUD**
KERAMISCHER REIFENSPIKE
CRAMPON CÉRAMIQUE POUR PNEU

(30) Priority: 23.11.2015 KR 20150163794
(43) Date of publication of application: 04.07.2018
(73) Proprietor: Mun, Dae-yong, Seoul 06347 (KR)
(72) Inventor: Mun, Dae-yong, Seoul 06347 (KR)
(74) Representative: Zardi, Marco
(86) International application number: PCT/KR2016/003852
(87) International publication number: WO 2017/090844

(56) References cited:
- EP-A1- 1 055 509
- EP-A1- 2 314 466
- WO-A1-92/13729
- JP-A- H0 958 225
- KR-U- 970 033 961
- US-A1- 2004 079 471
- US-B1- 6 374 886

## Description

### Technical Field

The present invention relates to method according to claim 1. Further disclosed is a tire thread stud having a stud improved to allow for use of a snow tire in every season, and more particularly, a tire mold that can prevent separation and deformation of a stud due to the weight of a vehicle and allows for use of a tire in four seasons and a material for a stud.

### Background Art

A tire tread, which is a rubber layer that comes in contact with the surface of a road, has a continuous plurality of grooves and blocks, and various tires having metallic studs driven in thread blocks have been developed to improve the performance of preventing sliding and twisting of the tire when the tire is in contact with a wet road surface or icy road surface.

Despite these efforts, the technologies developed up to now are applied only to snow tires, so there is a limit in variety of use.

### [Citation List]

### [Patent Literature]

[Patent Literature 1] KR 10-1997-0064984A
[Patent Literature 2] KR 10-2010-0065957A

Further prior art is known from EP 1055509 and US 6374886.

### Disclosure

### Technical Problem

The present invention has been made in an effort to solve the above problems. Disclosed is a method of not inserting a stud into a completed tire as in the related art, but a method according to which of a tire thread made of ceramic is fixed by a mold stud pin in a tire vulcanizing mold, and a vulcanizing process is performed such that the tire ceramic stud is embedded out of the mold in order to prevent separation of the stud due to poor insertion in the inserting method of the related art and separation property between rubber and a metallic stud, by using porosities on the surface of ceramic.

### Technical solution

In order to achieve the above object, a mold stud pin is driven into a fastening portion formed with a female thread at the circumferential center of a block in a tire vulcanizing mold, a tire thread stud (ceramic) manufactured in advance to fit to the diameter of the thread is fitted, and then the vulcanizing process is performed such that the tire stud made of ceramic is embedded due to heat and pressure.

### Advantageous Effects

According to the tire thread molds in the related art, it is inconvenient to manufacture different molds for stud fitting grooves every time in accordance with patterns.

The ceramic stud tire using a mold stud pin in a mold manufactured in the above method has the advantage that the existing mold can be reused, a method of fastening a stud in a mold that is more accurate than a stud inserting method after completion is used, and separation and deformation that frequently occurs on the existing metallic tire studs are reduced due to porous absorption on a surface that is a characteristic of ceramic. Accordingly, the ceramic stud tire is suitable for particularly all-season tires and non-pneumatic tires.

### Brief Description of Drawings

FIG. 1 is a cross-sectional view showing a tire stud fixed by a mold stud pin at the center of a thread block in a tire vulcanizing mold.
FIG. 2A is a cross-sectional view showing a vulcanizing mold block having a female threaded-groove at the center of a thread block in a tire vulcanizing mold.
FIG. 2B is a view showing a mold stud pin having a male thread at the upper portion and a flat cylindrical shape at the lower portion.
FIG. 2C is a ceramic stud only for a tire.
FIGS. 3A and 3B are view showing ceramic studs passing through a tire.

### Best Mode

### Mode for Invention

Hereinafter, the present invention will be described with reference to the accompanying drawings.

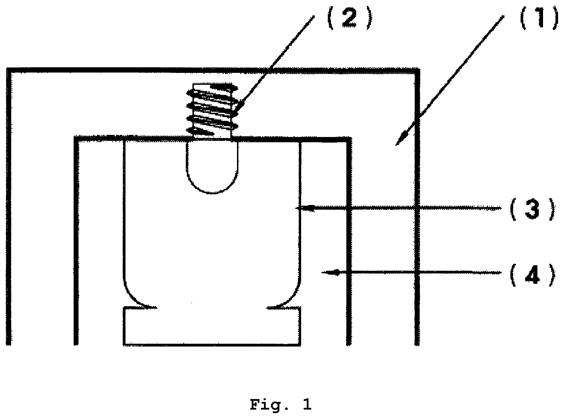

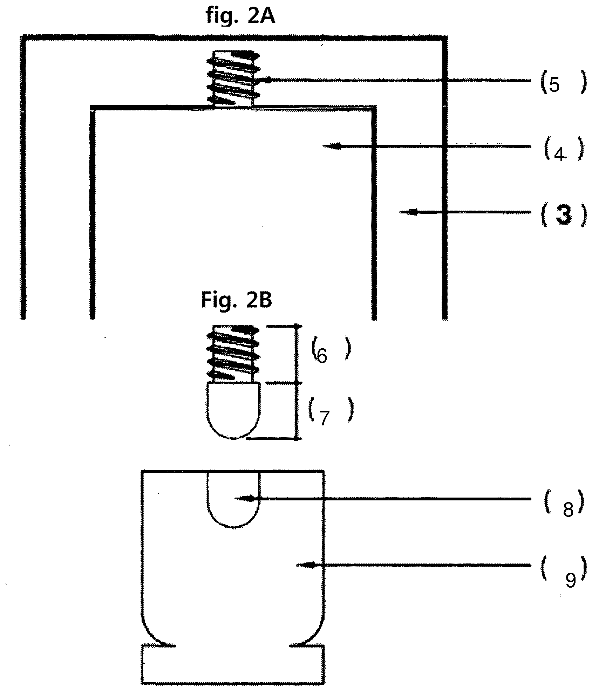

In a vulcanizing mold as indicated by (1) in FIG. 1, a female threaded-groove is formed at the center of a tire vulcanizing mold block formed in the axial direction and the circumferential direction of a tire as indicated by (2) in FIG. 1, and a cylindrical rod-shaped mold stud pin having a male thread at the upper portion (portion where a vulcanizing mold is fastened) and a flat surface at the lower portion (portion fixing the tire stud) is fastened to the female threaded-groove, as in FIG. 2B.

In this process, the ceramic stud manufactured by hot pressing, reactive sintering, normal sintering, and HIP, etc. only for a tire thread, that is, a ceramic stud indicated by (1) in FIG. 2C and having a fixing portion groove fitted to the shape of the lower flat cylindrical shape at the lower portion except for the male thread at the upper portion of a mold stud at the center of the upper portion of the body is fitted, as in FIG. 2C.

Next, a green tire is put into the vulcanizing mold and sufficient heat and pressure are applied.

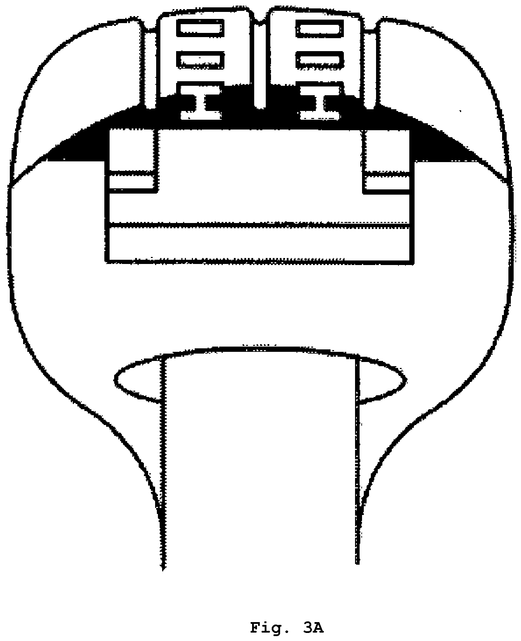

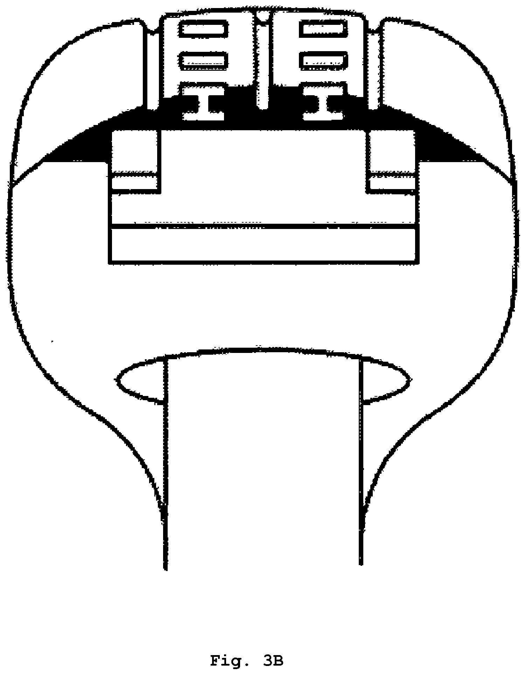

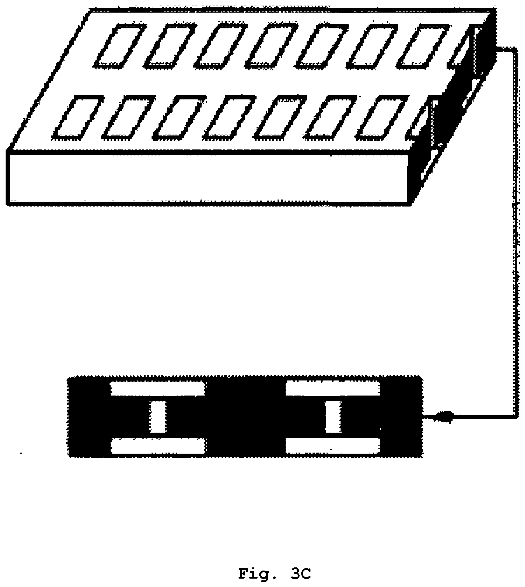

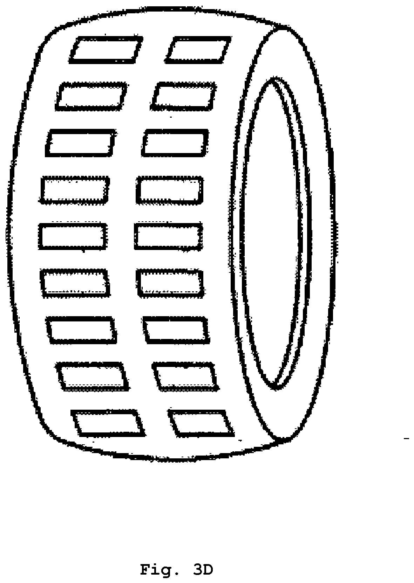

Next, a tire with a stud is separated from the vulcanizing mold and achieved as in FIGS. 3A and 3B.

### [Reference Numerals]

[FIG. 1]
   - (1): Tire Vulcanizing mold
   - (2): Mold stud pin
   - (3): Ceramic Stud
   - (4): Green tire
[FIG. 2]
   (A)
      (4) Green Tire
      (5) Female thread of fastening portion
      (3) Tire vulcanizing mold
   (B) Mold stud pin
      (6) Male thread
      (7) Cylindrical flat surface
   (C) Ceramic stud
      (8) Fitting groove
      (9) Body

## Claims

1. A method of inserting a ceramic stud in a tire tread comprising the steps of:
- manufacturing a fastening portion with a female thread (2) inside a tire vulcanizing mold (3),
- manufacturing a cylindrical rod-shaped mold stud pin (2) having a male thread at the upper part and a cylindrical flat surface at the lower part,
- fastening the male thread of the mold stud pin (2) to the female thread of the fastening portion (2),
- fixing a ceramic stud (3) to the lower part of the mold stud pin (2), and
- performing a tire vulcanization process, by which the ceramic stud (3) is embedded in the block portion of tire tread and keeps embedded in the tire tread when the tire and the vulcanizing mold (3) are detached, so that
the poor insertion, detachment and deformation of the ceramic stud (3) are prevented due to adsorptive force by porosity of the ceramic surface of the ceramic stud (3).

## Patentansprüche

1. Verfahren zum Einfügen eines keramischen Spikes in ein Reifenprofil umfassend die Schritte:
- Herstellen eines Befestigungsabschnitts mit Innengewinde (2) innerhalb eines Reifenvulkanisierungsformstücks (3),
- Herstellen eines zylindrischen stangenförmigen Formspikestifts (2), der ein Außengewinde an dem oberen Teil und eine zylindrische flache Oberfläche an dem unteren Teil aufweist,
- Befestigen des Außengewindes des Formspikestifts (2) an dem Innengewinde des Befestigungsabschnitts (2),
- Fixieren eines keramischen Spikes (3) an den unteren Teil des Formspikestifts (2), und
- Durchführen eines Reifenvulkanisierungsprozesses, durch den der keramische Spike (3) in den Blockabschnitt des Reifenprofils eingebettet wird und in dem Reifenprofil eingebettet bleibt, wenn der Reifen und das Vulkanisierungsformstück (3) abgenommen werden, so dass aufgrund einer adsorptiven Kraft durch eine Porosität der keramischen Oberfläche des keramischen Spikes das schlechte Einfügen, Lösen und Deformieren des keramischen Spikes (3) verhindert werden.

## Revendications

1. Méthode pour insérer un crampon céramique dans la bande de roulement d'un pneu comprenant les étapes suivantes :
- fabriquer un élément de fixation avec une bande de roulement femelle (2) dans un moule (3) de vulcanisation du pneu,
- fabriquer un goujon de moule (2) en forme de barre cylindrique ayant une bande de roulement mâle au niveau de sa partie supérieure et une surface plane cylindrique à sa partie inférieure,
- fixer la bande de roulement mâle du goujon du moule à la bande de roulement femelle de l'élément de fixation (2),
- fixer la tige céramique (3) à la partie inférieure du goujon (2) du moule, et
- mettre en œuvre le processus de vulcanisation du pneu, dans laquelle la tige céramique (3) est incorporée dans la partie de blocage de la bande de roulement du pneu et reste incorporée dans la bande de roulement du pneu lorsque le pneu et le moule de vulcanisation (3) sont séparés, de telle façon que la faible insertion, la séparation et la déformation de la tige céramique (3) sont évitées en raison de la force d'absorption due à la porosité de la surface céramique de la tige céramique (3).
